# EUROPÄISCHE PATENTSCHRIFT

(11) **EP 2 126 292 B1**
(45) Veröffentlichungstag und Bekanntmachung des Hinweises auf die Patenterteilung: **25.07.2012**
(21) Anmeldenummer: 08716093.3
(22) Anmeldetag: 28.02.2008
(51) Int. Cl.: F16C 23/00, F01L 13/00, F01L 1/047, F01M 9/10

(54) **VENTILTRIEB FÜR GASWECHSELVENTILE EINER BRENNKRAFTMASCHINE MIT EINEM AXIAL BEWEGLICHEN LAGER**
VALVE DRIVE FOR GAS EXCHANGE VALVES OF AN INTERNAL COMBUSTION ENGINE, COMPRISING AN AXIALLY MOVABLE BEARING
MÉCANISME DE DISTRIBUTION POUR DES SOUPAPES D'ÉCHANGE DES GAZ D'UN MOTEUR À COMBUSTION INTERNE, DOTÉ D'UN PALIER À MOUVEMENT AXIAL

(30) Priorität: 02.03.2007 DE 102007010148
(43) Veröffentlichungstag der Anmeldung: 02.12.2009
(73) Patentinhaber: AUDI AG, 85045 Ingolstadt (DE)
(72) Erfinder: SCHÖNEBERG, Dirk, 91790 Raitenbuch (DE); VOGES, Holger, 84184 Tiefenbach (DE); WUTZLER, Jörg, 08064 Zwickau (DE)
(86) Internationale Anmeldenummer: PCT/EP2008/001564
(87) Internationale Veröffentlichungsnummer: WO 2008/107106

(56) Entgegenhaltungen:
- EP-A- 0 328 010
- WO-A-2008/012306
- DE-A1- 10 148 243
- DE-A1- 10 241 920
- DE-A1- 19 519 048
- DE-A1-102004 011 586
- DE-A1-102004 021 376
- US-A- 5 129 407
- US-A- 5 218 883

## Beschreibung

Die Erfindung betrifft einen Ventiltrieb für Gaswechselventile einer Brennkraftmaschine gemäß dem Oberbegriff des Anspruchs 1 und eine Brennkraftmaschine mit einem solchen Ventiltrieb (siehe DE 10148 243 A1).

Zur Verbesserung der thermodynamischen Eigenschaften von Brennkraftmaschinen sind mechanische Vorrichtungen bekannt, die das Arbeitsspiel des Ventiltriebes beeinflussen und beispielsweise eine drehzahlabhängige Veränderung der Öffnungszeiten oder des Hubs der Gaswechselventile von Zylindern der Brennkraftmaschine ermöglichen.

Aus der DE 10 2004 011 586 A1 ist bereits ein Ventiltrieb der eingangs genannten Art bekannt, bei der ein Nockenträger drehfest und axial verschiebbar auf einer Grundnockenwelle angeordnet ist. Zur Betätigung von zwei Gaswechselventilen eines Zylinders der Brennkraftmaschine sind auf dem Nockenträger zwei axial versetzte Nockengruppen vorgesehen, von denen jede zwei Nocken mit verschiedenen Nockenprofilen aufweist. Durch axiale Verschiebung des Nockenträgers auf der Grundnockenwelle zwischen zwei Verschiebestellungen kann jeweils einer der beiden Nocken jeder Nockengruppe mit einem Schlepphebel von einem der Gaswechselventile in Anlagekontakt gebracht werden, wodurch sich der Hub und/oder die Öffnungszeiten des Gaswechselventils verstellen lassen. Die axiale Verschiebung des Nockenträgers auf der Nockenwelle erfolgt mit Hilfe von zwei Schneckentrieben, die im axialen Abstand voneinander im Zylinderkopfgehäuse der Brennkraftmaschine angeordnet sind, wobei jeder Schneckentrieb ein Stellorgan in Form eines Aktuators und ein Eingriffselement in Form eines Mitnehmerstifts aufweist, wobei sich das letztere durch Betätigung des Stellorgans mit einer Kurvenkulisse auf dem Nockenträger in Eingriff bringen lässt. Die Kurvenkulisse weist bei dem einen der beiden Schneckentriebe eine linksdrehende schraubenförmige Nut und bei dem anderen der beiden Schneckentriebe eine rechtsdrehende schraubenförmige Nut auf, so dass der Nockenträger nach rechts bzw. links verschoben wird, je nachdem ob das Stellorgan des einen oder des anderen Schneckentriebs betätigt wird. Der Nockenträger ist in einem ortsfesten Lager zwischen den beiden Nockenprofilgruppen drehbar und axial verschiebbar gelagert. Die EP 1 608 849 B1 offenbart ebenfalls einen solchen Ventiltrieb.

Zur Verbesserung der Beeinflussung des Arbeitsspiels des Ventiltriebs wäre es wünschenswert, die Nockengruppen um einen weiteren Nocken mit einer anderen Nockenkontur bzw. einem anderen Nockenprofil zu erweitern. Eine solche Erweiterung der Nockengruppen um einen weiteren Nocken bzw. ein weiteres Nockenprofil macht es jedoch erforderlich, den Nockenträger zwischen drei verschiedenen Verschiebestellungen hin und her zu bewegen, in denen jeweils ein anderer Nocken oder ein anderes Nockenprofil mit dem Schlepphebel zusammenwirkt. Dadurch wird der Verschiebeweg des Nockenträgers länger, was in Anbetracht des relativ geringen axialen Abstands zwischen zwei benachbarten Gaswechselventilen eines Zylinders insbesondere im Fall einer Lagerung des Nockenträgers zwischen den Ventilen zu Problemen bei der axialen Dimensionierung des Lagers führen kann.

Ausgehend hiervon liegt der Erfindung die Aufgabe zugrunde, einen Ventiltrieb der eingangs genannten Art dahingehend zu verbessern, dass sich der Verschiebeweg des Nockenträgers ohne Probleme hinsichtlich der axialen Dimensionierung des Lagers vergrößern lässt, insbesondere wenn dieses zwischen den Ventilen angeordnet ist.

Diese Aufgabe wird erfindungsgemäß dadurch gelöst, dass das Lager in Bezug zum Gehäuse der Brennkraftmaschine in axialer Richtung der Nockenwelle verschiebbar ist, wobei das Lager eine drehfest im Gehäuse der Brennkraftmaschine montierte Lagerbuchse umfasst.

Aufgrund seiner axialen Verschiebbarkeit kann das Lager bei einer Verschiebung des Nockenträgers in derselben Richtung wie der Nockenträger verschoben werden, was es trotz des relativ geringen axialen Abstands zwischen zwei benachbarten Gaswechselventilen eines Zylinders möglich macht, dass ein zwischen den Gaswechselventilen angeordnetes Lager eine große tragende Lagerbreite besitzt.

Dadurch kann das Lager nach Bedarf entweder als konventionelles Gleitlager oder aber auch als Wälzlager ausgebildet werden.

Die axiale Verschiebung des Lagers erfolgt zusammen mit der axialen Verschiebung des Nockenträgers, wozu das Lager gemäß einer vorteilhaften Ausgestaltung der Erfindung in eine Ausnehmung zwischen zwei gegenüberliegende Begrenzungsflächen des Nockenträgers eingesetzt wird, deren Abstand der Breite des Lagers entspricht und die beim Verschieben des Nockenträgers auf entgegengesetzte Stirnflächen des Lagers einwirken, um das Lager zusammen mit dem Nockenträger zu verschieben. Die Verschiebung des Nockenträgers erfolgt in analoger Weise wie im Stand der Technik mittels eines Schneckentriebs, der in einem axialen Abstand vom Lager angeordnet ist.

Eine bevorzugte Ausgestaltung der Erfindung sieht vor, dass der Nockenträger mindestens eine Nocken- oder Nockenprofilgruppe mit zwei oder mehr unterschiedlichen Nockenprofilen umfasst und dass das Lager in diskreten Verschiebestellungen arretierbar ist, deren Abstand dem Mittenabstand der zwei oder mehr Nockenprofile entspricht. Vorzugsweise umfasst jede Nocken- oder Nockenprofilgruppe des Nockenträgers drei unterschiedliche Nockenprofile, während das Lager in drei Verschiebestellungen arretierbar ist, deren Abstand dem jeweiligen Mittenabstand der drei Nockenprofile entspricht.

Die Arretierung des Nockenträgers erfolgt vorzugsweise durch eine ortsfest im Gehäuse der Brennkraftmaschine montierte, von außen her auf das Lager einwirkende Arretiervorrichtung. Auf diese Weise lässt sich die Arretiervorrichtung erheblich leichter unterbringen und fertigen als eine Arretiervorrichtung, die wie bei dem Ventiltrieb in der eingangs genannten DE 10 2004 011 586 A1 im Inneren der Nockenwelle angeordnet ist und von innen her auf den Nockenträger einwirkt. Außerdem kann die Toleranzproblematik entschärft werden.

Um unterschiedlichen Wärmedehnungen der Nockenwelle bzw. des mit der Arretiervorrichtung bestückten Zylinderkopfgehäuses Rechnung zu tragen, wird der Nockenträger mit Hilfe der Arretiervorrichtung in seinen entgegengesetzten äußeren Verschiebestellungen bevorzugt gegen einen Anschlag des Zylinderkopfgehäuses verspannt.

Eine weitere vorteilhafte Ausgestaltung der Erfindung sieht vor, dass der Nockenträger zwei im Abstand angeordnete Nocken- oder Nockenprofilgruppen umfasst und dass das Lager zwischen den beiden Nocken- oder Nockenprofilgruppen angeordnet ist und an diese angrenzt, wobei es zumindest während der Verschiebung des Nockenträgers mit einer seiner beiden entgegengesetzten Stirnflächen gegen eine axiale Begrenzungsfläche von einer der beiden Nocken- oder Nockenprofilgruppen anliegt.

Um die Gleitreibung zwischen der Stirnfläche des Lagers und der benachbarten axialen Begrenzungsfläche der angrenzenden Nocken- oder Nockenprofilgruppe zu minimieren, weisen die beiden entgegengesetzten Stirnflächen des Lagers zweckmäßig einen Außendurchmesser auf, der kleiner als ein Grundkreisdurchmesser der Nocken und/oder Nockenprofile der Nocken- oder Nockenprofilgruppen ist.

Wenn das Lager in konventioneller Weise als Gleitlager ausgebildet ist, umfasst es die drehfest innerhalb des Zylinderkopfgehäuses der Brennkraftmaschine montierte Lagerbuchse, die in Bezug zum Zylinderkopfgehäuse in axialer Richtung der Nockenwelle geführt verschiebbar ist und eine zur Drehachse der Nockenwelle koaxiale innere Umfangsfläche aufweist, die auf der benachbarten äußeren Umfangsfläche eines zylindrischen Abschnitts des Nockenträgers gleitet. Demgegenüber ist ihre äußere Umfangsfläche nicht rotationssymmetrisch bzw. koaxial zur Drehachse der Nockenwelle und durchsetzt eine komplementäre Führungsausnehmung in mindestens einer die Lagerbuchse haltenden Zylinderkopflagerbrücke formschlüssig.

Zur Schmierung des Gleitlagers weist die Lagerbuchse in diesem Fall zweckmäßig mehrere die Wand der Lagerbuchse durchsetzende Schmiermittelkanäle auf, die an der inneren und der äußeren Umfangsfläche der Lagerbuchse münden, so dass die aufeinander gleitenden Umfangsflächen des Lagers und des Nockenträgers aus einem zweckmäßig in der Zylinderkopflagerbrücke ausgesparten Schmiermittelzufunrkanal durch die Lagerbuchse hindurch mit unter Druck stehendem Motoröl beaufschlagt werden können. Um zu gewährleisten, dass der Schmiermittelzufuhrkanal in der Lagerbrücke ungeachtet der Verschiebestellung des Nockenträgers und der Lagerbuchse mit deren innerer Umfangsfläche kommuniziert, weist die Lagerbuchse vorzugsweise eine der Anzahl der Nocken jeder Nocken- oder Nockenprofilgruppe entsprechende Anzahl von Schmiermittelkanälen auf, deren Mündungen an der äußeren Umfangsfläche der Lagerbuchse in einem dem Mittenabstand der Nocken oder Nockenprofile der Nocken- oder Nockenprofilgruppe entsprechenden axialen Abstand angeordnet sind.

Im folgenden wird die Erfindung anhand eines in der Zeichnung dargestellten Ausführungsbeispiels näher erläutert. Es zeigen:
Fig. 1: eine Draufsicht von oben auf einen Ventiltrieb für eine Mehrzahl von Einlassventilen von Zylindern einer Brennkraftmaschine, der zwei auf einer Nockenwelle verschiebbare Nockenträger umfasst;
Fig. 2: eine Stirnseitenansicht des Ventiltriebs in Richtung der Pfeile II-II in Fig. 1;
Fig. 3: eine Längsschnittansicht des Ventiltriebs entlang der Linie III-III der Fig. 2.

Mit dem in der Zeichnung nur teilweise dargestellten Ventiltrieb 1 für vier Einlassventile (nicht dargestellt) von Zylindern einer Brennkraftmaschine mit einer obenliegenden, in einem Zylinderkopfgehäuse der Brennkraftmaschine drehbar gelagerten Nockenwelle 2 lassen sich der Hub und die Öffnungszeiten der beiden von der Nockenwelle 2 betätigten Einlassventile jedes Zylinders verstellen.

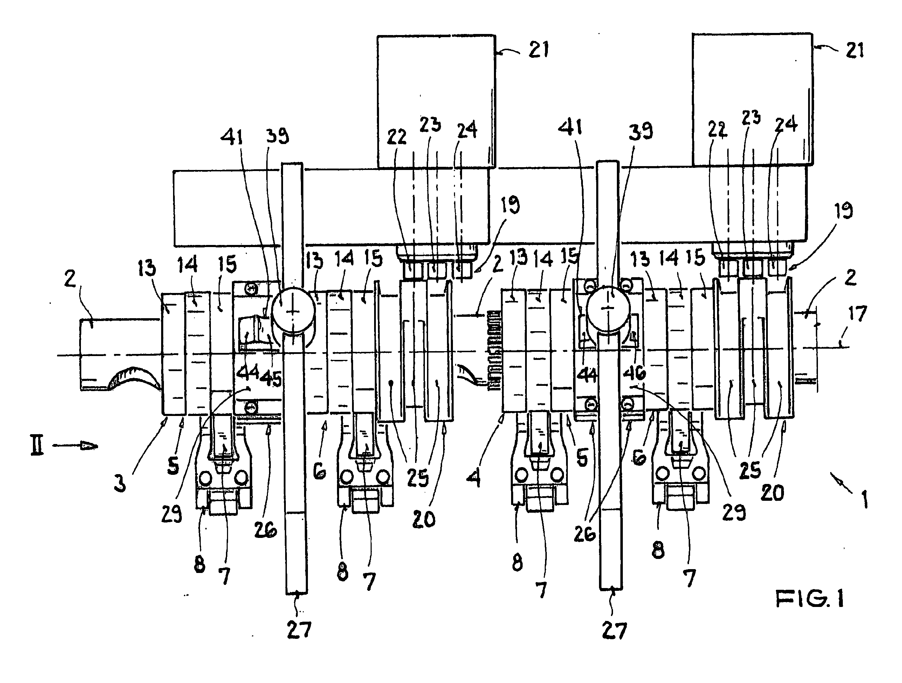

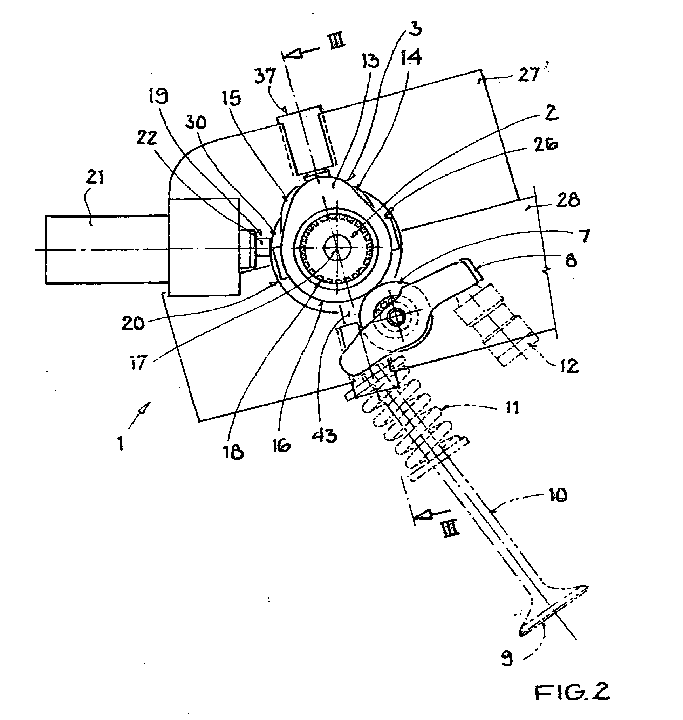

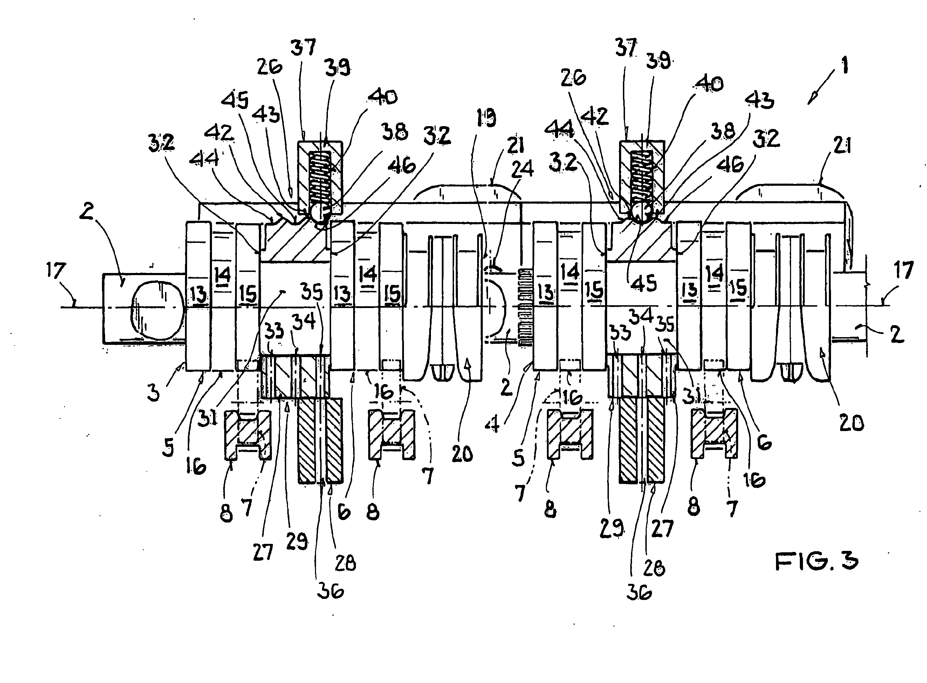

Wie am besten in Fig. 1 und 3 dargestellt, umfasst der Ventiltrieb 1 dazu für jedes Paar von Einlassventilen einen drehfest und axial verschiebbar auf der Nockenwelle 2 montierten Nockenträger 3 bzw. 4, wobei jeder Nockenträger 3, 4 zwei im axialen Abstand voneinander angeordnete Nockengruppen 5, 6 aufweist. Jede der beiden Nockengruppen 5, 6 wirkt mit einer Rolle 7 eines schwenkbar gelagerten Rollenschlepphebels 8 von einem der Ventile zusammen. Über die Rolle 7 wird ein in Fig. 2 in unterbrochenen Linien dargestelltes, am unteren Ende mit einem Ventilteller 9 versehenes Ventilglied 10 betätigt, das sich zum Öffnen des jeweiligen Ventils entgegen der Kraft einer Ventilfeder 11 im Zylinderkopf nach unten drücken lässt. Der Ventiltrieb 1 umfasst darüber hinaus für jedes der Ventile ein ebenfalls in Fig. 2 in unterbrochenen Linien dargestelltes hydraulisches Ventilspielausgleichselement 12.

Jede der beiden Nockengruppen 5, 6 jedes Nockenträgers 3, 4 weist drei Nocken 13, 14, 15 auf, die unterschiedliche Nockenkonturen oder Nockenprofile besitzen und sich durch axiale Verschiebung des zugehörigen Nockenträgers 3, 4 auf der Nockenwelle 2 wahlweise mit der Rolle 7 des Schlepphebels 8 des zugehörigen Ventils in Anlagekontakt bringen lassen. Dies ist in Fig. 1 beispielhaft dargestellt, wo in einer ersten äußeren Verschiebestellung des linken Nockenträgers 3 die Rollen 7 der Schlepphebel 8 der beiden linken Ventile gegen den rechten äußeren Nocken 15 der beiden Nockengruppen 5 und 6 anliegen, während die Rollen 7 der Schlepphebel 8 der beiden rechten Ventile in einer zweiten mittleren Verschiebestellung des rechten Nockenträgers 4 gegen die mittleren Nocken 14 der beiden Nockengruppen 5 und 6 anliegen.

Wie am besten in Fig. 2 dargestellt, weisen die beiden Nockengruppen 5, 6 jeweils auf der zu den Nocken 13, 14, 15 entgegengesetzten, in Fig. 2 nach unten weisenden Seite des Nockenträgers 3, 4 einen Grundkreisabschnitt 16 auf, dessen Außendurchmesser über die gesamte axiale Länge der Nockengruppen 5, 6 derselbe ist und sich über einen Umfangswinkel von etwa 180 Grad erstreckt. Die Nocken 13, 14, 15 jeder Nockengruppe 5, 6 weisen unterschiedliche Konturen oder Profile auf, wobei die Scheitel der Konturen des jeweils linken und des jeweils rechten äußeren Nockens 13 und 15 zwar in etwa denselben Abstand von der Drehachse 17 der Nockenwelle 2 aufweisen (Fig. 1), jedoch in Umfangsrichtung gegeneinander versetzt sind (Fig. 2), während der Scheitel der Kontur des jeweils mittleren Nockens 14 in einem geringeren Abstand von der Drehachse 17 der Nockenwelle 2 angeordnet und außerdem in Umfangsrichtung gegen die Scheitel der Konturen der Nocken 13, 15 versetzt ist (Fig. 2). Die Abstände der Scheitel der Nockenkonturen sind so an die Hubhöhen der Ventilglieder 10 angepasst, dass die Einlassventile ganz geöffnet werden, wenn in der in Fig. 1 und 3 am Beispiel des linken Nockenträgers 3 dargestellten ersten äußeren Verschiebestellung die rechten Nocken 15 oberhalb der Rollen 7 der zugehörigen Schlepphebel 8 angeordnet sind und mit diesen zusammenwirken, während die Einlassventile nur teilweise geöffnet werden, wenn in der in Fig. 1 und 3 am Beispiel des rechten Nockenträgers 4 dargestellten zweiten mittleren Verschiebestellung die mittleren Nocken 14 mit den Rollen 7 der zugehörigen Schlepphebel 8 zusammenwirken. Wenn in einer dritten äußeren Verschiebestellung der Nockenträger 3, 4 die Necken 13 mit den Rollen 7 der zugehörigen Schlepphebel 8 zusammenwirkten, werden die Einlassventile ebenfalls ganz geöffnet, jedoch im Vergleich zur ersten Verschiebestellung mit anderen Öffnungszeiten. Die Reihenfolge der drei Nocken 12, 13, 14 ist bei allen Nockengruppen 5, 6 auf den Nockenträgern 3, 4 dieselbe, jedoch können die Konturen der Nocken 12, 13, 14 verschiedener Nockengruppen 5, 6 unterschiedlich geformt und/oder bemessen sein.

Um die Nockenträger 3, 4 drehfest mit der Nockenwelle 2 zu verbinden, jedoch ihre axiale Verschiebung entlang der Nockenwelle 2 zu ermöglichen, weisen die hohlzylindrischen Nockenträger 3, 4 an ihrem inneren Umfang eine Längsverzahnung auf, die mit einer komplementären Außenverzahnung auf der Nockenwelle 2 kämmt, wie in Fig. 2 bei 18 dargestellt.

Die axiale Verschiebung der Nockenträger 3, 4 auf der Nockenwelle 2 zur Verstellung des Hubs oder der Öffnungszeiten der Einlassventile erfolgt bei Bedarf und wird immer dann vorgenommen, wenn der Grundkreisabschnitt 16 der Nockengruppen 5, 6 während eines Drehwinkels der Nockenwelle 2 von etwa 180 Grad den Rollen 7 der Schlepphebel 8 gegenüberliegt. Das Maß der axialen Verschiebung des Nockenträgers 3, 4 zwischen zwei benachbarten Verschiebestellungen entspricht dem Mittenabstand benachbarter Nocken 13, 14 bzw. 14, 15 oder Nockenprofile.

Damit die Nockenträger 3, 4 bei Bedarf in eine beliebige der drei Verschiebestellungen verschoben werden können, ist für jeden Nockenträger 3, 4 ein Schneckentrieb 19 vorgesehen. Jeder der Schneckentriebe 19 umfasst eine Kurvenkulisse 20 am rechten Stirnende des zugehörigen Nockenträgers 3 bzw. 4, sowie ein ortsfest im Zylinderkopfgehäuse montiertes Stellorgan 21 (Aktuator) mit drei in axialem Abstand angeordneten Eingriffselementen in Form von Mitnehmerstiften 22, 23, 24, von denen sich jeweils einer aus dem Stellorgan 21 ausfahren und mit seinem freien Ende mit einer Nut 25 der Kurvenkulisse 20 in Eingriff bringen lässt, um den Nockenträger 3, 4 jeweils um den Mittenabstand zweier benachbarter Nocken 13, 14 bzw. 14, 15 nach links oder rechts zu verschieben.

Die Ausbildung und die Funktionsweise des Schneckentriebs 19 ist in einer mitanhängigen Patentanmeldung des Anmelders mit der internen Kennung P6501 und demselben Anmeldetag ausführlich beschrieben, auf deren Offenbarung hier verwiesen wird.

Der axiale Verschiebeweg der Nockenträger 3, 4 in den beiden äußeren Verschiebestellungen, das heißt in der ersten und in der dritten Verschiebestellung, wird jeweils durch einen Anschlag (nicht dargestellt) des Zylinderkopfgehäuses begrenzt.

Um die Nockenträger 3, 4 in Bezug zur Drehachse 17 der Nockenwelle 2 zu zentrieren bzw. während ihrer Verschiebung in Bezug zur Drehachse 17 zentriert zu halten, sind die Nockenträger 3 und 4 jeweils zwischen zwei Ventilen mittels eines Gleitlagers 26 drehbar gelagert, wie am besten in den Figuren 1 und 3 dargestellt. Jedes der beiden Lager 26 wird von zwei übereinander angeordneten, quer zur Drehachse 17 der Nockenwelle 2 ausgerichteten, in Bezug zum Zylinderkopfgehäuse ortsfesten Zylinderkopf-Lagerbrücken 27, 28 gehalten, von denen die eine 27 oberhalb und die andere 28 unterhalb der Nockenwelle 2 angeordnet ist.

Im Unterschied zu bekannten, ortsfest im Zylinderkopfgehäuse montierten Lagern von Nockenwellen oder Nockenträgern sind die beiden Gleitlager 26 in Bezug zu den Zylinderkopf-Lagerbrücken 27, 28 in axialer Richtung der Nockenwelle 2 verschiebbar, so dass sie jeweils zusammen mit dem zugehörigen Nockenträger 3, 4 axial verschoben werden, wenn dieser bei Bedarf in eine andere Verschiebestellung bewegt wird.

Zu diesem Zweck umfassen die beiden Gleitlager 26 jeweils eine Lagerbuchse 29, die zwischen den beiden Nockengruppen 5, 6 jedes Nockenträgers 3, 4 drehbar auf diesem montiert und in einer axialen Führungsausnehmung 30 der beiden zugehörigen Zylinderkopf-Lagerbrücken 27, 28 geführt verschiebbar ist. Die Führungsausnehmung 30 weist einen nicht-kreisförmigen Öffnungsquerschnitt auf, während die Lagerbuchse 29 einen komplementären nicht-kreisförmigen Außenquerschnitt besitzt, um einerseits zu verhindern, dass sich die Lagerbuchse 29 mit dem Nockenträger 3, 4 mitdreht und andererseits die Lagerbuchse 29 bei ihrer axialen Verschiebung formschlüssig zu führen. Hingegen weist die Lagerbuchse 29 einen zur Drehachse 17 der Nockenwelle 2 koaxialen kreisförmigen Innenquerschnitt auf, dessen Durchmesser so an den Außendurchmesser eines das Gleitlager 26 durchsetzenden zylindrischen Abschnitts 31 des Nockenträgers 3, 4 angepasst ist, dass die zylindrische innere Umfangsfläche der Lagerbuchse 29 auf der gegenüberliegenden äußeren Umfangsfläche des Nockenträgerabschnitts 31 gleitet. Der Durchmesser des Nockenträgerabschnitts 31 ist dabei kleiner als der Durchmesser der Grundkreisabschritte 16 der Nockengruppen 5, 6, wie in Fig. 3 dargestellt.

Zur Befestigung auf dem zylindrischen, beiderseits von axialen Begrenzungsflächen der Nockengruppen 5 bzw. 6 begrenzten Nockenträgerabschnitt 31 des zugehörigen Nockenträgers 3, 4 ist die Lagerbuchse 29 aus zwei Halbschalen zusammengesetzt, die in einer durch die Drehachse 17 der Nockenwelle 2 verlaufenden Ebene miteinander verbunden sind. Die axiale Länge der Lagerbuchse 29 ist geringfügig kürzer als der Abstand zwischen den gegenüberliegenden axialen Begrenzungsflächen der beiden Nockengruppen 5 bzw. 6 jedes Nockenträgers 3, 4, so dass sich der Nockenträger 3, 4 mit geringem axialem Spiel in Bezug zur Lagerbuchse 29 drehen kann. Um im Falle eines Kontakts zwischen den entgegengesetzten Stirnflächen der Lagerbuchse 29 und den jeweils benachbarten Begrenzungsflächen der Nockengruppen 5 bzw. 6, zum Beispiel während einer Verschiebung des Nockenträgers 3, 4 auf der Nockenwelle 2, die Reibung zwischen der Stirnfläche und der gegenüberliegenden Begrenzungsfläche zu minimieren, weist die Lagerbuchse 29 zwei abgesetzte Stirnenden 32 (Fig. 3) auf, deren Außendurchmesser kleiner als die äußeren Querschnittabmessungen des Rests der Lagerbuchse 29 sind. Weiter ist die axiale Länge der Lagerbuchse 29 so gewählt, dass sie in den beiden äußeren Verschiebstellungen zwar den benachbarten Schlepphebel 8, nicht jedoch dessen Rolle 7 axial überlappt.

Die Lagerbuchse 29 weist an ihrer Unterseite drei radiale Schmiermittelkanäle 33, 34, 35 auf, die sich von einer äußeren Umfangsfläche der Lagerbuchse 29 durch deren Wand hindurch bis zur inneren Umfangsfläche erstrecken, die im Gleitkontakt mit der Umfangsfläche des Nockenträgerabschnitts 31 steht. Die Schmiermittelkanäle 33, 34, 35 sind in einem axialen Abstand angeordnet, der dem Mittenabstand benachbarter Nocken 13, 14, 15 bzw. Nockenprofile entspricht, so dass in jeder der drei Verschiebestellungen des Nockenträgers 3, 4 und der Lagerbuchse 29 einer der Schmiermittelkanäle 33, 34, 35 mit einem Schmiermittelzufuhrkanal 36 in der unteren Zylinderkopflagerbrücke 28 kommuniziert. Durch den Kanal 36 wird unter Druck stehendes Motoröl in den jeweils fluchtenden Schmiermittelkanal 33, 34 oder 35 zugeführt, wie in Fig. 3 für den rechten bzw. mittleren Schmiermittelkanal 35 bzw. 34 beispielhaft dargestellt.

Um den Nockenträger 3, 4 mit der Lagerbuchse 29 in der gewünschten Verschiebestellung festzuhalten, ist die Lagerbuchse 29 mittels einer Arretiervorrichtung 37 in jeder der Verschiebestellungen axial arretierbar. Wie am besten in Fig. 3 dargestellt, umfasst die Arretiervorrichtung 37 ein ortsfest in der Zylinderkopf-Lagerbrücke 27 oberhalb des Nockenträgers 3, 4 montiertes Rastmittel in Form einer von einer Schraubendruckfeder 40 in einer Federbuchse 39 federnd vorgespannten Rastkugel 38, die sich in jeder der drei Verschiebestellungen der Nockenträger 3, 4 in Rasteingriff mit einer auf der Oberseite der Lagerbuchse 29 montierten axialen Rastleiste 41 (Fig. 1) bringen lässt, welche drei durch Vorsprünge 42, 43 getrennte, den Verschiebestellungen entsprechende Rasteinbuchtungen 44, 45, 46 aufweist.

Die Ausbildung und die Funktionsweise der Arretiervorrichtung 37 ist in einer mitanhängigen Patentanmeldung des Anmelders mit der internen Kennung P6500 und demselben Anmeldetag ausführlich beschrieben, auf deren Offenbarung hier verwiesen wird.

### BEZUGSZEICHENLISTE

- 1: Ventiltrieb
- 2: Nockenwelle
- 3: Nockenträger
- 4: Nockenträger
- 5: Nockengruppe
- 6: Nockengruppe
- 7: Rolle
- 8: Rollenschlepphebel
- 9: Ventilteller
- 10: Ventilglied
- 11: Ventilfeder
- 12: Ventilspielausgleichselement
- 13: Nocken
- 14: Nocken
- 15: Nocken
- 16: Grundkreisabschnitt
- 17: Drehachse Nockenwelle
- 18: Verzahnung
- 19: Schneckentrieb
- 20: Kurvenkulisse
- 21: Stellorgan
- 22: Eingriffselement
- 23: Eingriffselement
- 24: Eingriffselement
- 25: Nut
- 26: Lager
- 27: Zylinderkopf-Lagerbrücke oben
- 28: Zylinderkopf-Lagerbrücke unten
- 29: Lagerbuchse
- 30: Führungsausnehmung
- 31: zylindrischer Nockenträgerabschnitt
- 32: Stirnenden Lagerbuchse
- 33: Schmiermittelkanal
- 34: Schmiermittelkanal
- 35: Schmiermittelkanal
- 36: Schmiermittelzufuhrkanal
- 37: Arretiervorrichtung
- 38: Rastkugel
- 39: Federbuchse
- 40: Schraubendruckfeder
- 41: Rastleiste
- 42: Vorsprung
- 43: Vorsprung
- 44: Rasteinbuchtung
- 45: Rasteinbuchtung
- 46: Rasteinbuchtung

## Patentansprüche

1. Ventiltrieb (1) einer Brennkraftmaschine mit einer Nockenwelle (2), die in einem Gehäuse der Brennkraftmaschine drehbar gelagert ist, mindestens einem drehfest und axial verschiebbar auf der Nockenwelle (2) geführten Nockenträger (3,4), sowie einem Lager (26) zur drehbaren Lagerung des Nockenträgers (3,4), **dadurch gekennzeichnet, dass** das Lager (26) in Bezug zum Gehäuse der Brennkraftmaschine in axialer Richtung der Nockenwelle (2) verschiebbar ist, wobei das Lager (26) eine drehfest im Gehäuse der Brennkraftmaschine montierte Lagerbuchse (29) umfasst.

2. Ventiltrieb nach Anspruch 1, **dadurch gekennzeichnet, dass** das Lager (2) zusammen mit dem Nockenträger (3, 4) verschiebbar ist.

3. Ventiltrieb nach Anspruch 1 oder 2, **gekennzeichnet durch** Einrichtungen (19) zum axialen Verschieben des Nockenträgers (3, 4) und des Lagers (26).

4. Ventiltrieb nach einem der Ansprüche 1 bis 3, **dadurch gekennzeichnet, dass** das Lager (26) ein Gleitlager ist.

5. Ventiltrieb nach einem der Ansprüche 1 bis 3, **dadurch gekennzeichnet, dass** das Lager ein Wälzlager ist.

6. Ventiltrieb nach einem der vorangehenden Ansprüche, **dadurch gekennzeichnet, dass** das Lager (26) zwischen zwei gegenüberliegende Begrenzungsflächen des Nockenträgers (3, 4) eingesetzt ist, deren Abstand der Breite des Lagers (26) entspricht.

7. Ventiltrieb nach einem der vorangehenden Ansprüche, **dadurch gekennzeichnet, dass** der Nockenträger (3, 4) mindestens eine Nocken- oder Nockenprofilgruppe (5, 6) mit mehreren unterschiedlichen Nocken (13, 14, 15) und/oder Nockenprofilen umfasst und dass das Lager (26) in mindestens zwei diskreten Verschiebestellungen arretierbar ist, deren Abstand dem Mittenabstand der Nocken (13, 14, 15) und/oder Nockenprofile entspricht.

8. Ventiltrieb nach einem der vorangehenden Ansprüche, **dadurch gekennzeichnet, dass** die mindestens eine Nocken- oder Nockenprofilgruppe (5, 6) drei unterschiedliche Nocken (13, 14, 15) und/oder Nockenprofile umfasst und dass das Lager (26) in drei diskreten Verschiebestellungen arretierbar ist, deren Abstand dem Mittenabstand der Nocken (13, 14, 15) und/oder Nockenprofile entspricht.

9. Ventiltrieb nach einem der vorangehenden Ansprüche, **dadurch gekennzeichnet, dass** der Nockenträger (3, 4) zwei Nocken- oder Nockenprofilgruppen (5, 6) umfasst und dass das Lager (26) an die beiden Nocken- oder Nockenprofilgruppen (5, 6) angrenzt.

10. Ventiltrieb nach Anspruch 9, **dadurch gekennzeichnet, dass** das Lager (26) mindestens während einer Verschiebung des Nockenträgers (3, 4) mit einer seiner entgegengesetzten Stirnflächen gegen eine axiale Begrenzungsfläche von einer der Nocken- oder Nockenprofilgruppen (5, 6) anliegt.

11. Ventiltrieb nach Anspruch 10, **dadurch gekennzeichnet, dass** die entgegengesetzten Stirnflächen des Lagers (26) einen Außendurchmesser aufweisen, der kleiner ist als ein Grundkreisdurchmesser der Nocken (13, 14, 15) und/oder Nockenprofile.

12. Ventiltrieb nach Anspruch 1, **dadurch gekennzeichnet, dass** die Lagerbuchse (29) eine zur Nockenwelle (2) koaxiale innere Umfangsfläche und eine zur Nockenwelle (2) nicht-koaxiale äußere Umfangsfläche aufweist.

13. Ventiltrieb nach Anspruch 12, **gekennzeichnet durch** mindestens zwei, die Lagerbuchse (29) durchsetzende, an der inneren und der äußeren Umfangsfläche der Lagerbuchse (29) mündende Schmiermittelkanäle (33, 34, 35).

14. Ventiltrieb nach Anspruch 13, **dadurch gekennzeichnet, dass** der Abstand der Einmündungen der Schmiermittelkanäle (33, 34, 35) an der äußeren Umfangsfläche der Lagerbuchse (29) dem Mittenabstand der Nocken (13, 14, 15) und/oder Nockenprofile entspricht.

15. Ventiltrieb nach einem der vorangehenden Ansprüche, **gekennzeichnet durch** eine im Gehäuse der Brennkraftmaschine montierte axiale Führung (27, 28, 30) für das Lager (26).

16. Ventiltrieb nach einem der vorangehenden Ansprüche, **dadurch gekennzeichnet, dass** der Nockenträger (3, 4) durch eine auf das Lager (26) einwirkende Arretiereinrichtung (37) in diskreten Verschiebestellungen arretierbar ist, deren Abstand dem Mittenabstand der Nocken (13, 14, 15) und/oder Nockenprofile entspricht.

17. Ventiltrieb nach Anspruch 16, **dadurch gekennzeichnet, dass** die Arretiereinrichtung (37) den Nockenträger (3, 4) in entgegengesetzten äußersten Verschiebestellungen gegen einen Anschlag des Gehäuses der Brennkraftmaschine oder der Nockenwelle (2) verspannt.

18. Ventiltrieb nach Anspruch 16 oder 17, **dadurch gekennzeichnet, dass** der Arretiervorrichtung (37) in einem Winkelabstand von den Einmündungen der Schmiermittelkanäle (33, 34, 35) angeordnet ist.

19. Brennkraftmaschine, **gekennzeichnet durch** mindestens einen Ventiltrieb (1) nach einem der vorangehenden Ansprüche.

## Claims

1. Valve train (1) of an internal combustion engine, comprising a camshaft (2) which is rotatably mounted in a housing of the internal combustion engine, at least one cam carrier (3, 4) which is guided for rotation therewith and for axial displacement on the camshaft (2), and a bearing (26) for rotatably mounting the cam carrier (3, 4), **characterised in that** the bearing (26) is displaceable in an axial direction of the camshaft (2) with respect to the housing of the internal combustion engine, the bearing (26) comprising a bearing bush (29) which is non-rotatably mounted in the housing of the internal combustion engine.

2. Valve train according to claim 1, **characterised in that** the bearing (2) is displaceable together with the cam carrier (3, 4).

3. Valve train according to either claim 1 or claim 2, **characterised by** means (19) for axially displacing the cam carrier (3, 4) and the bearing (26).

4. Valve train according to any of claims 1 to 3, **characterised in that** the bearing (26) is a plain bearing.

5. Valve train according to any of claims 1 to 3, **characterised in that** the bearing (26) is a rolling bearing.

6. Valve train according to any of the preceding claims, **characterised in that** the bearing (26) is inserted between two opposing boundary surfaces of the cam carrier (3, 4), the spacing of which corresponds to the width of the bearing (26).

7. Valve train according to any of the preceding claims, **characterised in that** the cam carrier (3, 4) comprises at least one cam group or cam profile group (5, 6) having a plurality of different cams (13, 14, 15) and/or cam profiles, and **in that** the bearing (26) can be locked in at least two discrete displacement positions, the spacing of which corresponds to the centre-to-centre distance of the cams (13, 14, 15) and/or cam profiles.

8. Valve train according to any of the preceding claims, **characterised in that** the at least one cam group or cam profile group (5, 6) comprises three different cams (13, 14, 15) and/or cam profiles, and **in that** the bearing (26) can be locked in three discrete displacement positions, the spacing of which corresponds to the centre-to-centre distance of the cams (13, 14, 15) and/or cam profiles.

9. Valve train according to any of the preceding claims, **characterised in that** the cam carrier (3, 4) comprises two cam groups or cam profile groups (5, 6), and **in that** the bearing (26) is contiguous with the two cam groups or cam profile groups (5, 6).

10. Valve train according to claim 9, **characterised in that** the bearing (26), at least during displacement of the cam carrier (3, 4), rests with one of its opposing end faces against an axial boundary surface of one of the cam groups or cam profile groups (5, 6).

11. Valve train according to claim 10, **characterised in that** the opposing end faces of the bearing (26) have an external diameter which is smaller than a base circle diameter of the cams (13, 14, 15) and/or cam profiles.

12. Valve train according to claim 1, **characterised in that** the bearing bush (29) has an internal peripheral surface which is coaxial with the camshaft (2) and an external peripheral surface which is not coaxial with the camshaft (2).

13. Valve train according to claim 12, **characterised by** at least two lubricant ducts (33, 34, 35) which penetrate the bearing bush (29) and end at the internal and the external peripheral surface of the bearing bush (29).

14. Valve train according to claim 13, **characterised in that** the spacing of the discharge points of the lubricant ducts (33, 34, 35) at the external peripheral surface of the bearing bush (29) corresponds to the centre-to-centre distance of the cams (13, 14, 15) and/or cam profiles.

15. Valve train according to any of the preceding claims, **characterised by** an axial guide (27, 28, 30) which is mounted in the housing of the internal combustion engine and intended for the bearing (26).

16. Valve train according to any of the preceding claims, **characterised in that** the cam carrier (3, 4) can be locked in discrete displacement positions by a locking means (37) which acts on the bearing (26), the spacing of which positions corresponds to the centre-to-centre distance of the cams (13, 14, 15) and/or cam profiles.

17. Valve train according to claim 16, **characterised in that** the locking means (37) clamps the cam carrier (3, 4) in opposing outermost displacement positions against a stop of the housing of the internal combustion engine or of the camshaft (2).

18. Valve train according to either claim 16 or claim 17, **characterised in that** the locking means (37) is arranged at an angular distance from the discharge points of the lubricant ducts (33, 34, 35).

19. Internal combustion engine, **characterised by** at least one valve train (1) according to any of the preceding claims.

## Revendications

1. Mécanisme de distribution (1) d'une machine à combustion interne comprenant un arbre à cames (2), qui est monté à rotation dans une caisse de la machine à combustion interne, au moins un support de cames (3, 4) solidaire en rotation et guidé de manière à pouvoir se déplacer axialement sur l'arbre à cames (2), ainsi qu'un palier (26) pour le montage à rotation du support de cames (3, 4), **caractérisé en ce que** le palier (26) peut être déplacé par rapport à la caisse de la machine à combustion interne dans la direction axiale de l'arbre à cames (2), dans lequel le palier (26) comprend un coussinet (29) monté solidaire en rotation dans la caisse de la machine à combustion interne.

2. Mécanisme de distribution selon la revendication 1, **caractérisé en ce que** le palier (2) peut être déplacé conjointement avec le support de cames (3, 4).

3. Mécanisme de distribution selon la revendication 1 ou 2, **caractérisé par** des dispositifs (19) pour assurer le déplacement axial du support de cames (3, 4) et du palier (26).

4. Mécanisme de distribution selon l'une quelconque des revendications 1 à 3, **caractérisé en ce que** le palier (26) est un palier lisse.

5. Mécanisme de distribution selon l'une quelconque des revendications 1 à 3, **caractérisé en ce que** le palier (26) est un palier à roulement.

6. Mécanisme de distribution selon l'une quelconque des revendications précédentes, **caractérisé en ce que** le palier (26) est inséré entre deux faces limites opposées du support de cames (3, 4), dont la distance correspond à la largeur du palier (26).

7. Mécanisme de distribution selon l'une quelconque des revendications précédentes, **caractérisé en ce que** le support de cames (3, 4) comprend au moins un groupes de cames ou de profils de cames (5, 6) avec plusieurs cames (13, 14, 15) et/ou profils de cames différents et **en ce que** le palier (26) peut être arrêté dans au moins deux positions de déplacement discrètes, dont la distance correspond à la distance moyenne des cames (13, 14, 15) et/ou des profils de cames.

8. Mécanisme de distribution selon l'une quelconque des revendications précédentes, **caractérisé en ce que** le au moins un groupe de cames ou de profils de cames (5, 6) comprend trois cames (13, 14, 15) et/ou profils de cames différents et **en ce que** le palier (26) peut être arrêté dans trois positions de déplacement discrètes, dont la distance correspond à la distance moyenne des cames (13, 14, 15) et/ou des profils de cames.

9. Mécanisme de distribution selon l'une quelconque des revendications précédentes, **caractérisé en ce que** le support de cames (3, 4) comprend deux groupes de cames ou de profils de cames (5, 6) et **en ce que** le palier (26) est adjacent aux deux groupes de cames ou de profils de cames (5, 6).

10. Mécanisme de distribution selon la revendication 9, **caractérisé en ce que** le palier (26) s'applique, au moins au cours d'un déplacement du support de cames (3, 4), par une de ses faces opposées, contre une face limite axiale d'un des groupes de cames ou de profils de cames (5, 6).

11. Mécanisme de distribution selon la revendication 10, **caractérisé en ce que** les faces opposées du palier (26) présentent un diamètre externe qui est plus petit que le diamètre de base des cames (13, 14, 15) et/ou des profils de cames.

12. Mécanisme de distribution selon la revendication 1, **caractérisé en ce que** le coussinet (29) présente une face périphérique interne coaxiale à l'arbre à cames (2) et une face périphérique externe non coaxiale à l'arbre à cames (2).

13. Mécanisme de distribution selon la revendication 12, **caractérisé par** au moins deux canaux de lubrifiant (33, 34, 35) traversant le coussinet (29) et débouchant sur la face périphérique interne et sur la face périphérique externe du coussinet (29).

14. Mécanisme de distribution selon la revendication 13, **caractérisé en ce que** la distance des entrées des canaux de lubrifiant (33, 34, 35) sur la face périphérique externe du coussinet (29) correspond à la distance moyenne des cames (13, 14, 15) et/ou des profils de cames.

15. Mécanisme de distribution selon l'une quelconque des revendications précédentes, **caractérisé par** un guide (27, 28, 30) axial monté dans la caisse de la machine à combustion interne pour le palier (26).

16. Mécanisme de distribution selon l'une quelconque des revendications précédentes, **caractérisé en ce que** le support de cames (3, 4) peut être arrêté par un dispositif d'arrêt (37) opérant sur le palier (26) dans des positions de déplacement discrètes, dont la distance correspond à la distance moyenne des cames (13, 14, 15) et/ou des profils de cames.

17. Mécanisme de distribution selon la revendication 16, **caractérisé en ce que** le dispositif d'arrêt (37) presse le support de cames (3, 4) dans des positions de déplacement extrêmes opposées contre une butée de la caisse de la machine à combustion interne ou de l'arbre à came (2).

18. Mécanisme de distribution selon la revendication 16 ou 17, **caractérisé en ce que** le dispositif d'arrêt (37) est agencé à distance angulaire des entrées des canaux de lubrifiant (33, 34, 35).

19. Machine à combustion interne, **caractérisée par** au moins un mécanisme de distribution (1) selon l'une quelconque des revendications précédentes.
